# FASCICULE DE BREVET EUROPEEN

(11) **EP 0 433 192 B1**
(45) Date de publication et mention de la délivrance du brevet: **15.09.1993**
(21) Numéro de dépôt: 90420539.0
(22) Date de dépôt: 11.12.1990
(51) Int. Cl.: B23P 19/06, E21B 19/16

(54) **Dispositif permettant d'effectuer le rodage par vissage-dévissage de jonctions filetées pour assemblage de tubes**
Einrichtung zum Einfahren von Gewindeverbindungen für Rohrstränge durch Festschrauben und Losdrehen
Device for running in of threaded couplings for tube assemblies by screwing and unscrewing

(30) Priorité: 13.12.1989 FR 8917202
(43) Date de publication de la demande: 19.06.1991
(73) Titulaire: IDPA SA, Aulnoye-Aymeries (FR)
(72) Inventeur: Fradin, Louis, F-59620 Aulnoye-Aymeries (FR); Meurant, Michel, F-59145 Berlaimont (FR)
(74) Mandataire: Desolneux, Jean-Paul Charles

(56) Documents cités:
- GB-A- 1 519 086
- US-A- 4 605 077
- US-A- 4 697 830
- US-A- 4 836 064

## Description

Le dispositif et le procédé qui font l'objet de l'invention concernent le rodage des jonctions filetées pour assemblage de tubes. Ils concernent en particulier les composants des jonctions filetées (tool joints) qui sont rapportées par soudage aux extrémités des tiges tubulaires utilisées pour les forages pétroliers.

En utilisation, ces tiges qui comportent chacune une extrémité mâle et une extrémité femelle subissent de nombreux cycles de vissage-dévissage avec chaque fois serrage à couple élevé. L'expérience montre que, lors des premiers cycles, malgré la protection des filets par des traitements adaptés, tels que le cuivrage, l'enduction de poudre de zinc, ou autre, ces filets sont particulièrement susceptibles d'être endommagés, par exemple par grippage au vissage ou au dévissage.

Pour éviter ces risques il est de pratique courante d'effectuer, avant mise en service de ces tiges tubulaires, un rodage avec ou sans graisse qui consiste à soumettre chacune des extrémités filetées de chaque tige à au moins un cycle de vissage-dévissage, comportant un blocage en fin de vissage avec application d'un couple dont le moment est, de préférence, supérieur à ceux qui seront appliqués en utilisation. L'expérience montre qu'en effectuant ce vissage de façon précise à vitesse de rotation modérée et avec application d'un couple de serrage progressif, on évite en service les phénomènes de grippage et d'endommagement des filets. De plus le blocage de la jonction avec un couple de moment supérieur à celui utilisé dans la pratique crée une sorte d'écrouissage superficiel au niveau des filets et des portées de joint qui réduit les risques ultérieurs d'endommagement. Les meilleurs résultats sont obtenus en effectuant plusieurs cycles de vissage-dévissage avec contrôle précis du moment du couple et en accroissant celui-ci au fur et à mesure.

Ces opérations sont rendues difficiles par la longueur des tiges tubulaires, d'environ une dizaine de mètres chacune. Leur alignement précis, en général à l'horizontale, n'est pas toujours facile à réaliser. Ces tiges peuvent aussi présenter une légère courbure qui peut être cause d'un alignement incorrect des filetages mâle et femelle avec détérioration des filets au cours du vissage. Enfin l'exécution de cycles successifs de vissage-dévissage s'accompagne de la formation d'empreintes plus ou moins profondes laissées par les mors des clés de serrage sur la paroi extérieure des zones d'extrémité des tiges. Dans certains cas, la pression des mors déforme les extrémités des tiges tubulaires et peut causer aussi la formation de fissures.

On a recherché la possibilité de réaliser un dispositif permettant d'effectuer le rodage des jonctions filetées de tubes, appelés aussi tiges tubulaires (rods), par exécution d'au moins un cycle de vissage-dévissage qui permette d'éviter les inconvénients des méthodes connues qui viennent d'être décrites. On a recherché en premier lieu la possibilité d'éviter les déformations permanentes des extrémités des tubes, sous la pression exercée par les mors des clés de serrage. On a recherché aussi la possibilité de supprimer les risques de formation locale d'empreintes ou d'amorces de criques, sous l'action des dents de ces mors. On a recherché également la possibilité de réaliser un serrage, à vitesse déterminée, des composants de la jonction filetée, avec atteinte d'un couple de blocage ayant un moment maximal déterminé. On a recherché aussi la possibilité de simplifier les conditions de réalisation des cycles de vissage-dévissage nécessaires au rodage des jonctions filetées, lorsque celles-ci sont du type à composants rapportés par soudage aux extrémités des tubes après usinage.

Le dispositif et le procédé qui font l'objet de l'invention permettent d'atteindre les résultats recherchés tout en évitant les inconvénients des dispositifs connus.

Le dispositif suivant l'invention permet d'effectuer le rodage par vissage-dévissage des composants des jonctions filetées pour assemblage de tubes métalliques. Ce rodage peut être effectué alors que les composants de ces jonctions filetées sont solidaires des tubes auxquels ils correspondent. De préférence cependant, les composants de ces jonctions filetées, appelées le plus souvent "tool joints" sont rodés, au moyen du dispositif suivant l'invention, avant d'être rapportés par soudage aux extrémités des tubes, appelés aussi tiges tubulaires (rods), correspondants. Ce dispositif permet d'effectuer au moins un cycle de vissage-dévissage au niveau de chaque jonction filetée qu'il s'agit de roder. Il comprend deux clés de serrage venant en prise l'une sur le composant mâle et l'autre sur le composant femelle de chaque jonction. Chacune de ces clés comporte des moyens de prise, permettant de saisir la paroi extérieure du composant qui lui correspond et des moyens de serrage de ces moyens de prise sur cette paroi extérieure. Au moins une de ces clés est reliée à au moins un moyen d'entraînement en rotation autour de l'axe de la jonction filetée, permettant d'exercer sur le composant correspondant un couple de blocage, en fin de vissage, de moment déterminé, puis un couple de déblocage au début du dévissage. Avantageusement chacune de ces clés est reliée à au moins un moyen d'entraînement en rotation autour de l'axe de la jonction filetée, permettant d'exercer sur le composant correspondant un couple de blocage, en fin de vissage, de moment déterminé, puis un couple de déblocage au début du dévissage. Dans le cas où il n'y a qu'une clé reliée à un moyen d'entraînement en rotation, l'autre clé est maintenue fixe.

Suivant l'invention les moyens de prise de chacune de ces clés comportent au moins un mors mobile apte à coulisser, avec un faible jeu, dans une chambre dont les parois latérales l'entourent, sous l'action d'un moyen de poussée qui vient en appui sur la paroi arrière de ce mors dont la paroi frontale a un profil adapté à celui de la paroi externe en regard du composant contre lequel il vient exercer la pression nécessaire. Cette pression est celle qui permet d'appliquer au composant, au moyen de la clé, un couple de blocage de moment déterminé, puis de déblocage, sans glissement angulaire important du mors par rapport au composant. De plus la matière de base de ce mors mobile doit avoir une résistance à la déformation plastique inférieure à la contrainte créée dans ce mors par la poussée nécessaire pour empêcher le glissement sous l'action de ce moment.

De préférence, cette matière de base de ce mors mobile est un polymère organique solide tel qu'une matière plastique, un élastomère, ou encore un polymère combinant les propriétés d'une matière plastique et d'un élastomère. De façon avantageuse, ce polymère organique solide est renforcé par des fils ou fibres. En variante de façon avantageuse il contient des particules solides dures dispersées sur la surface du mors en regard du composant ou dans la masse du mors pour accroître le coefficient de frottement entre la surface du mors et la surface du composant. Ces particules peuvent par exemple être du carbure de tungstène en grains. L'ordre de grandeur de la dimension des grains peut être par exemple de 1 mm.

De préférence, le moyen de poussée du mors mobile est au moins un vérin dont la tête ou plaque de poussée, en contact avec la paroi arrière du mors, est engagée dans le fond de la chambre et coulisse à l'intérieur de celle-ci avec un faible jeu le long de ses parois latérales. De préférence, le mors mobile coopère avec un mors fixe, les deux mors se trouvant de part et d'autre du composant de la jonction filetée à l'intérieur de la chambre. De préférence également, le mors fixe est en une matière ayant une résistance à la déformation plastique inférieure à la contrainte maximale à laquelle elle est soumise par la pression exercée par le mors mobile sur le composant. Cette matière est avantageusement analogue à celle du mors mobile.

Le moyen d'entraînement en rotation de la clé ou de chacune des clés est avantageusement constitué par un bras solidaire de ladite clé, le bras étant radial par rapport à l'axe de la jonction, l'extrémité du bras étant reliée par une tige à au moins un vérin qui permet de faire tourner le bras, dans le sens du vissage ou du dévissage, avec une amplitude angulaire maximale déterminée qui peut par exemple être de 60°. Le moment maximal du couple exercé par le vérin est au moins égal au moment du couple de blocage qu'il s'agit de réaliser. De préférence, le vérin est hydraulique et est articulé par l'une de ses deux extrémités à l'extrémité du bras de la clé et par l'autre extrémité en un point de la structure qui supporte le palier autour duquel la clé est articulée en rotation.

Le dispositif comporte au moins un moyen d'indication du moment du couple exercé par les clés sur la jonction filetée. Ce moyen d'indication peut être alimenté par un signal fonction de la pression exercée par le fluide hydraulique qui agit sur un vérin relié à un bras. Lorsque l'angle "α", formé entre le bras radial de la clé et l'axe du vérin, est variable en fonction du déplacement angulaire du bras, un moyen de correction du signal est de préférence utilisé de façon à indiquer directement le moment du couple exercé par la clé, suivant la relation M = F.sin α. R, M étant le moment du couple, F la force appliquée par le vérin et R le rayon du bras de la clé. Lorsque deux vérins à double effet sont mis en oeuvre, actionnant chacun un bras d'une clé, ces deux vérins sont avantageusement disposés d'un même côté des clés et on alimente avantageusement en fluide haute pression un seul vérin à la fois, de façon à provoquer le déplacement du piston de ce vérin dans le sens voulu et on réalise une liaison permanente entre l'orifice situé à l'autre extrémité de la chambre du vérin et l'orifice correspondant de l'autre vérin de façon à provoquer le déplacement en sens inverse, synchronisé, du piston de celui-ci. Pour inverser le déplacement des pistons des deux vérins il suffit de changer le sens de circulation du fluide hydraulique en alimentant en fluide haute pression le deuxième vérin, l'écoulement de ce fluide se produisant par l'orifice du premier vérin par lequel ce fluide haute pression était d'abord injecté. Dans ce mode particulier d'alimentation des vérins, on utilise avantageusement comme source de pression fournissant le signal transmis à l'indicateur de moment du couple exercé, une prise de pression effectuée sur la canalisation de liaison entre les deux vérins.

L'invention concerne aussi un procédé, permettant d'effectuer le rodage de jonctions filetées pour assemblage de tubes, dans lequel on réalise au moins un cycle de vissage-dévissage des composants de cette jonction, solidaires ou non des tronçons tubulaires auxquels ils correspondent, procédé dans lequel deux clés sont chacune en prise sur un composant et, soit les deux clés étant mobiles soit une clef étant fixe et l'autre mobile, les clés sont entraînées d'un mouvement relatif en sens inverse pour bloquer ou débloquer la jonction. Selon ce procédé, on met en oeuvre, pour effectuer la prise de chaque clé sur le composant, au moins un mors logé dans une chambre qui l'entoure étroitement, mors qu'on soumet à une contrainte telle que, compte tenu de la matière dont il est composé, sa limite de résistance à la déformation plastique est dépassée et ce mors exerce une pression répartie sur la surface du composant avec lequel il est en contact. On utilise de préférence un deuxième mors fixe, logé dans la même chambre et dont la matière a des caractéristiques analogues à celles du mors mobile. On peut envisager aussi, pour réaliser le procédé de rodage suivant l'invention, de mettre en oeuvre plusieurs mors mobiles répartis angulairement autour de l'axe de chaque composant de la jonction filetée et mis en pression chacun dans une chambre. Afin de limiter l'écoulement plastique des mors à l'extérieur des chambres, il est nécessaire de réduire au minimum le jeu existant entre les bords des ouvertures de passage de ces chambres et la surface extérieure des composants de la jonction. De même, afin de contrôler cet écoulement plastique, on choisit comme matière de base pour les mors une matière ayant une vitesse de fluage limitée à une valeur convenable dans les conditions opératoires.

L'exemple et les figures ci-après décrivent, de façon non limitative, un mode particulier de réalisation du dispositif et du procédé qui font l'objet de l'invention.

La figure 1 est une vue d'ensemble, en perspective, d'un mode de réalisation du dispositif suivant l'invention.

La figure 2 est une vue en élévation d'une clé du dispositif suivant l'invention.

La figure 3 est une vue d'une jonction filetée dont on effectue le rodage par le procédé suivant l'invention.

La figure 4 montre, de façon schématique, un mode particulier d'alimentation des vérins qui actionnent les bras des clés du dispositif suivant l'invention.

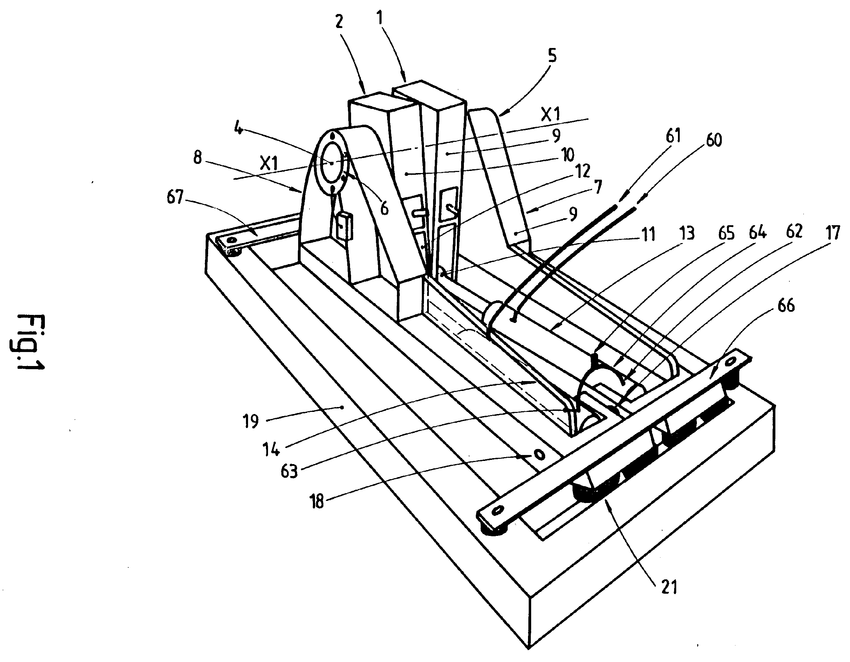

On voit figure 1 une vue d'ensemble d'un mode de réalisation du dispositif de rodage des composants de jonctions filetées (tool joints) pour tubes convenant plus particulièrement aux types de tubes appelés tiges ou tiges tubulaires (rods) utilisés pour les forages pétroliers.

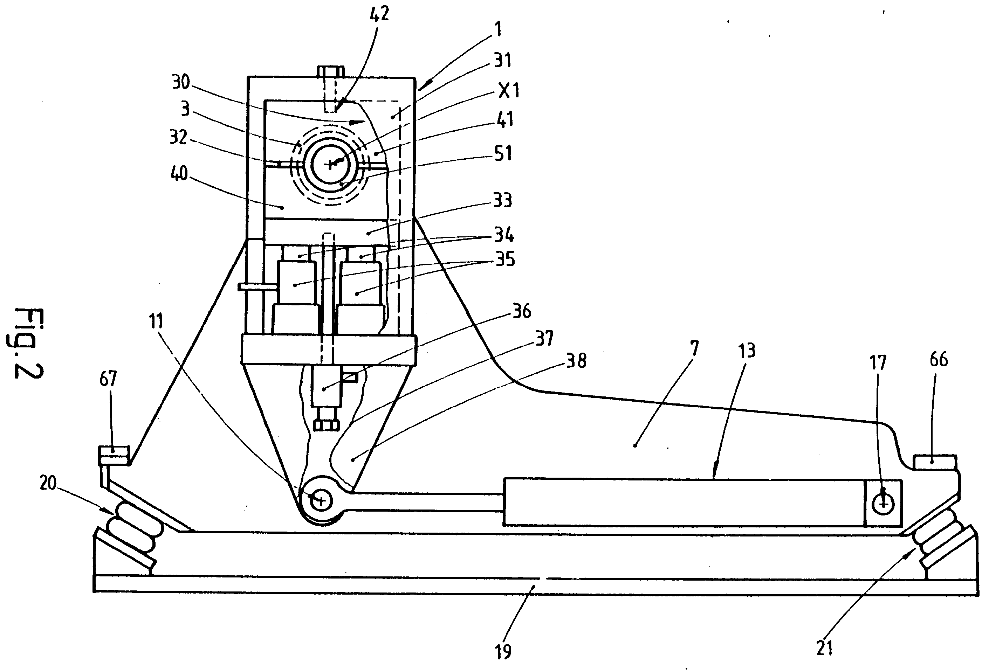

Ce dispositif comporte deux clés de serrage 1, 2 munies chacune d'un tourillon creux 3, 4, solidaire de la clé correspondante, qui est monté en rotation dans l'alésage formant palier 5, 6 d'une structure support de clé correspondante 7, 8. Chaque clé est munie d'un bras 9, 10 à l'extrémité 11, 12 duquel est reliée de façon articulée l'une des extrémités d'un vérin d'entraînement 13, 14. L'autre extrémité de ce vérin est fixée de façon articulée autour d'axes d'articulation en 17, 18 à la partie inférieure de la structure support de clé 7, 8. Les deux structures support de clé 7, 8 reposent elles-mêmes sur un châssis commun 19 par l'intermédiaire de pièces d'appui élastique telles que 20, 21 (voir fig.2). Au repos, en l'absence de contraintes les structures support de clé 7, 8 sont calées sur le châssis commun 19 de façon que leurs alésages 5, 6 aient un axe commun X1-X1. Dans ces conditions les deux clés se trouvent côte à côte, séparées par un faible écart qui varie au cours du serrage ou du desserrage des deux composants mâle et femelle d'une jonction filetée. Le jeu axial nécessaire est prévu pour que les tourillons creux 3, 4 puissent se déplacer axialement de la quantité correspondante dans les alésages 5, 6.

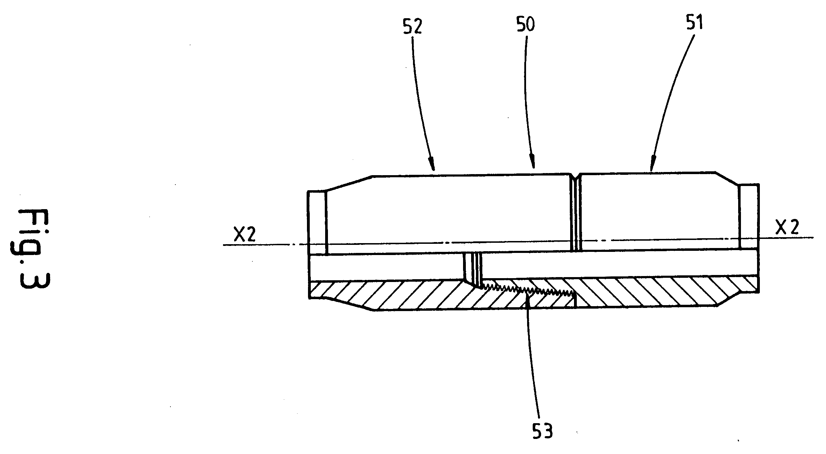

La figure 2 est une vue latérale, en élévation de la clé 1. Une découpe 30 effectuée dans la paroi latérale 31 de la chambre 32 de la clé 1 fait apparaître les mors mobile 40 et fixe 41 entourant le composant 51 de la jonction filetée 50 (voir figure 3). Les parois de la chambre 32 sont calculées pour résister à la pression qui leur est transmise par les mors 40, 41, lorsque ceux-ci dépassent leur limite de résistance à la déformation plastique. Cette chambre 32 comporte une ouverture dans laquelle est engagée la plaque de poussée 33 qui est poussée par les pistons 34 de deux vérins unidirectionnels 35 montés côte à côte et exerçant leur poussée de bas en haut. Un petit vérin de rappel 36 assure le retour de la plaque 33 et est rendu visible par la découpe 37 effectuée dans l'un des deux bras support 38 de l'articulation 11 du vérin 13. Le mors supérieur fixe 41 est solidarisé avec la paroi supérieure de la chambre 32 par au moins un moyen de retenue tel que la vis 42. Le mors inférieur mobile 40 est solidarisé avec la plaque de poussée 33 par des moyens adaptés non représentés. Chacun de ces mors présente, à sa mise en service, une surface d'appui de forme cylindrique en creux, s'étendant sur un peu moins de 180°. Le rayon de ces surfaces, avant mise en appui sur le composant est, à l'état initial, de préférence un peu plus faible que celui de la surface extérieure du composant sur lequel les mors vont exercer leur poussée de sorte que l'on réalise un effet de coin lors du serrage sur le composant. On peut par exemple réaliser les mors en polyamide tel que l'ERTALON (marque de la Société ERTA-NV Belgique) ou le NYLON.

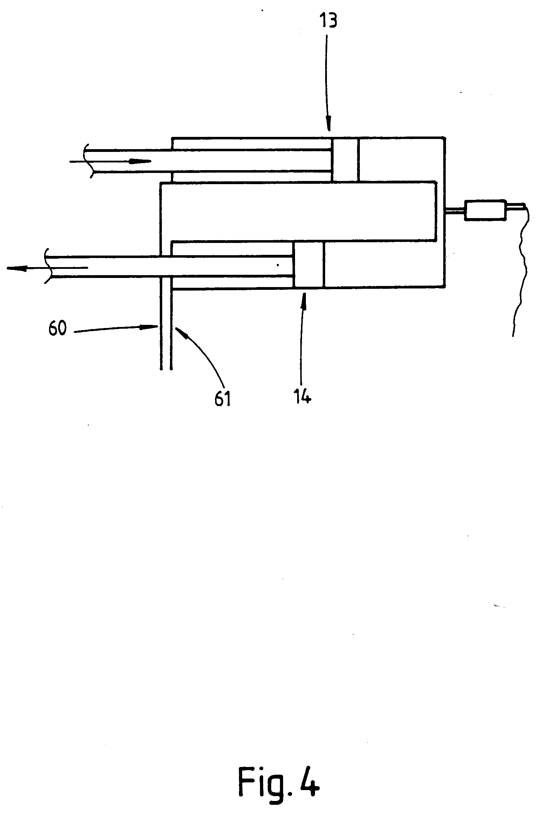

On utilise pour la réalisation de ces mors 40, 41 une matière plastique présentant une résistance au fluage relativement élevée, tout en conservant une ductilité suffisante et en ayant un coefficient de frottement suffisamment élevé pour transmettre, sans glissement, au composant correspondant, le couple exercé par le vérin 13. On ajuste la pression de serrage exercée par les mors 40, 41 sous l'action des vérins 35 en fonction du moment du couple de serrage qu'il s'agit de réaliser. Dans le cas de la jonction filetée 50 d'axe X2-X2 les composants 51, 52 ont des filets 53 coniques (voir fig.3). Il s'agit de composants destinés à être rapportés par soudage aux extrémités des tiges tubulaires correspondantes. On effectue, le plus souvent, un pré-vissage à très faible couple, avant blocage. La jonction prévissée ou non est introduite dans le passage prévu dans le dispositif, les diamètres intérieurs des tourillons creux 3, 4 ainsi que ceux des ouvertures centrées sur l'axe X1-X1 des parois telles que 31 des chambres telles que 32 étant déterminés pour cela. Les ouvertures des parois des chambres ne laissent qu'un faible jeu pour le passage des composants. De plus chacun de ceux-ci doit dépasser par sa partie cylindrique à l'extérieur des chambres telles que 32 afin de conserver ce faible jeu lorsque la poussée des mors est portée à sa valeur maximale. Comme le montrent les figures 1 et 4, on utilise de façon avantageuse une méthode particulière d'actionnement des vérins qui entraînent les clés.

Selon cette méthode un moyen d'alimentation en fluide haute-pression non représenté est relié, par un moyen distibuteur non représenté, à l'un des deux orifices d'introduction ou de sortie de fluide 60 ou 61. L'autre orifice 61 ou 60 est relié au conduit de retour de fluide à la pompe haute pression non représentée. Les deux autres orifices 62, 63 disposés aux extrémités des vérins voisins de leurs axes d'articulation 17, 18 sur le châssis 19 sont reliés entre eux par la canalisation de liaison 64, sur laquelle est prélevé, par la canalisation 65, le signal de pression qui contribue au fonctionnement de l'indicateur du moment du couple appliqué à la jonction 50. On voit que, lorsque le fluide haute pression pénètre par l'orifice 60, les clés sont entraînées par les vérins dans le sens du vissage (pour un pas à droite). Afin d'avoir la course maximale on alimente d'abord, sans prise des clés sur le composant, les vérins 13, 14 par l'orifice 61 dans le sens du dévissage. On met ensuite les clés en prise sur les composants 51, 52 de la jonction 50 par action des pistons tels que 34 des vérins tels que 35 sur les mors mobiles tels que 40 et enfin on alimente les vérins 13, 14 par l'orifice 60 dans le sens du vissage. On ajuste la pression de fluide à l'entrée jusqu'à ce que le niveau de pression dans la canalisation de liaison 64 atteigne la valeur voulue. On remarque qu'on dispose ainsi d'un angle total de vissage de 120°, sans dépasser pour les bras des clés une inclinaison de 30° par rapport à la verticale; l'angle α correspondant n'étant pas inférieur à 60° le sin α n'est pas inférieur à 0,866. Un tel angle de vissage est en général suffisant pour obtenir le blocage à couple élevé d'une telle jonction pré-vissée. Si c'est insuffisant on peut poursuivre le vissage. Si le moment visé pour couple de blocage est atteint, on voit qu'il est facile, en alternant l'introduction de fluide haute pression par les orifices 60, 61 d'exécuter plusieurs cycles de blocage déblocage de la jonction 50. On remarque que les efforts exercés par les vérins, en particulier au niveau des articulations 17, 18 sont absorbés par le châssis 19 grâce aux barres de retenue 66, 67 solidaires de ce châssis et aux pièces d'appui élastiques telles que 20, 21 qui jouent le rôle d'amortisseur.

De très nombreuses variantes ou modifications peuvent être apportées au dispositif et au procédé suivant l'invention qui ne sortent pas du domaine de celle-ci. En particulier, bien que l'exemple porte sur des jonctions filetées à filetage conique non encore montées sur les tiges tubulaires correspondantes il est bien évident que le dispositif et le procédé s'appliquent à tous types de jonction filetées coniques ou cylindriques pour tubes, que ces jonctions soient ou non solidaires des tubes qui leur correspondent.

## Revendications

1. Dispositif permettant d'effectuer le rodage de jonctions filetées (50) comprenant un composant mâle (51) et un composant femelle (52) pour assemblage de tubes métalliques, par exécution d'au moins un cycle de vissage-dévissage avec atteinte du blocage pour un moment déterminé du couple de vissage, ce dispositif comprenant deux clés (1,2) venant en prise chacune sur un composant (51,52) et au moins une de ces clés (1,2) étant reliée à un moyen d'entraînement en rotation permettant d'atteindre, en fin de vissage, le moment déterminé du couple de blocage caractérisé en ce que les moyens de prise de chacune de ces clés (1, 2) sur le composant correspondant (51, 52) comportent au moins un mors mobile (40), apte à coulisser avec un faible jeu dans une chambre (32) dont les parois latérales l'entourent, sous l'action d'un moyen de poussée (33) qui vient en appui contre la paroi arrière de ce mors mobile dont la paroi frontale s'applique sur la paroi externe du composant (51), la matière de base de ce mors mobile étant telle qu'elle présente une résistance à la déformation plastique inférieure à la contrainte à laquelle elle est soumise par le moyen de poussée pour empêcher le glissement angulaire du mors sur le composant sous l'action du moment du couple de blocage de la jonction (50).

2. Dispositif suivant la revendication 1 caractérisé en ce que chacune des clés est reliée à un moyen d'entraînement en rotation permettant d'atteindre, en fin de vissage, le moment déterminé du couple de blocage.

3. Dispositif suivant la revendication 1 ou 2 caractérisé en ce que la matière de base du mors mobile (40) est un polymère organique solide.

4. Dispositif suivant la revendication 3 caractérisé en ce que le polymère organique solide est une matière plastique, ou un élastomère, ou un polymère combinant les propriétés d'une matière plastique et d'un élastomère.

5. Dispositif suivant la revendication 3 ou 4 caractérisé en ce que le polymère organique solide contient au moins un additif sous forme de fibres ou de fils discontinus.

6. Dispositif suivant la revendication 3 ou 4 caractérisé en ce que le polymère organique solide contient au moins un additif sous forme de particules solides pour accroître le coefficient de frottement, ces particules solides étant dispersées soit sur la surface du mors en regard du composant soit dans la masse du mors.

7. Dispositif suivant l'une des revendications 1 à 6 caractérisé en ce que le moyen de poussée du mors mobile est au moins un vérin (35) dont la plaque de poussée (33) est engagée dans la chambre (32) avec un faible jeu et vient en appui contre la paroi arrière du mors mobile (40).

8. Dispositif suivant l'une des revendications 1 à 7 caractérisé en ce que le mors mobile (40) coopère avec un mors fixe (41) l'un et l'autre étant à l'intérieur de la même chambre (32), de part et d'autre du composant (51).

9. Dispositif suivant la revendication 8 caractérisé en ce que la matière de base du mors fixe (41) est analogue à celle du mors mobile (40).

10. Dispositif suivant l'une des revendications 1 à 9 caractérisé en ce que chaque clé reliée à un moyen d'entraînement en rotation (1, 2) est solidaire d'un bras radial (9, 10) par rapport à l'axe (X1-X1) de la jonction filetée dont l'extrémité est reliée par une liaison (11, 12) à au moins un vérin hydraulique (13, 14) qui permet de faire tourner le bras dans un sens ou dans l'autre le moment du couple exercé pouvant atteindre au moins le moment du couple de blocage de la jonction (50) à réaliser.

11. Dispositif suivant l'une des revendications 1 à 10 caractérisé en ce qu'il comporte un moyen d'indication de moment du couple exercé par les clés (1, 2) sur la jonction filetée (50) qui reçoit un signal de pression du fluide hydraulique qui agit sur au moins un vérin (13, 14), un moyen de correction étant appliqué directement en fonction du sinus de l'angle "α" formé par l'axe du vérin avec le rayon du bras de la clé à laquelle il est relié.

12. Dispositif suivant l'une des revendications 2 à 11 caractérisée en ce que deux vérins à double effet sont mis en oeuvre actionnant chacun un bras (9, 10) d'une clé (1, 2) les deux vérins comportant une liaison permanente (64) entre eux, à l'une de leurs extrémités située d'un même côté, l'alimentation en fluide à haute pression étant effectuée à l'une des deux autres extrémités choisie suivant le sens de vissage ou dévissage de la jonction à réaliser.

13. Procédé de rodage de jonctions filetées (50) pour assemblage de tubes dans lequel on réalise au moins un cycle de vissage-dévissage des composants de cette jonction (50) et dans lequel deux clés (1,2) sont chacune en prise sur un composant (51,52) et au moins une de ces clés étant entraînée en rotation pour bloquer ou débloquer la jonction caractérisé en ce que pour exercer la prise de chaque clé (1, 2) sur le composant (51, 52) qui lui correspond on met en oeuvre au moins un mors (40) logé dans une chambre (32) qui l'entoure étroitement et on soumet ce mors à une contrainte telle que, compte tenu de la matière dont il est composé, sa limite de résistance à la déformation plastique est dépassée et il exerce une pression répartie sur la surface du composant (51) avec lequel il est en contact.

14. Procédé selon la revendication 13 caractérisé en ce que les deux clés sont entraînées en rotation en sens inverse pour bloquer ou débloquer la jonction.

## Claims

1. Apparatus for effecting bedding-in of screwthreaded joints (50) comprising a male component (51) and a female component (52) for the assembly of metal tubes, for carrying out at least one screwing-unscrewing cycle with the attainment of locking for a given moment of the screwing torque, the apparatus comprising two wrenches (1,2) which each engage against a component (51,52) and at least one of the wrenches (1,2) being connected to a rotational entrainment means which makes it possible at the end of the screwing operation to attain the given moment in respect of the locking torque, characterised in that the engagement means of each of said wrenches (1, 2) for engaging the corresponding component (51, 52) comprise at least one mobile jaw (40) capable of sliding with a slight amount of clearance in a chamber (32), the side walls of which surround it, under the action of a thrust means (33) which comes to bear against the rear wall of said mobile jaw, the front wall of which is applied against the outside wall of the component (51), the basic material of said mobile jaw being such that it has a resistance to plastic deformation which is lower than the stress to which it is subjected by the thrust means to prevent angular slippage of the jaw on the component under the action of the moment of the torque for locking the joint (50).

2. Apparatus according to claim 1 characterised in that each of the wrenches is connected to a rotational entrainment means permitting the given moment of the locking torque to be attained at the end of the screwing operation.

3. Apparatus according to claim 1 or claim 2 characterised in that the basic material of the mobile jaw (40) is a solid organic polymer.

4. Apparatus according to claim 3 characterised in that the solid organic polymer is a plastic material or an elastomer or an or a polymer combining the properties of a plastic material and an elastomer.

5. Apparatus according to claim 3 or claim 4 characterised in that the solid organic polymer contains at least one additive in the form of discontinuous wires or threads or fibres.

6. Apparatus according to claim 3 or claim 4 characterised in that the solid organic polymer contains at least one additive in the form of solid particles for increasing the coefficient of friction, said solid particles being dispersed either over the surface of the jaw facing the component or in the mass of the jaw.

7. Apparatus according to one of claim 1 to 6 characterised in that the thrust means of the mobile jaw is at least one jack (35), the thrust plate (33) of which is engaged in the chamber (32) with a small amount of clearance and comes to bear against the chamber wall of the mobile jaw (40).

8. Apparatus according to one of claims 1 to 7 characterised in that the mobile jaw (40) co-operates with a fixed jaw (41), the two jaws being within the same chamber (32) on respective sides of the component (51).

9. Apparatus according to claim 8 characterised in that the basic material of the fixed jaw (41) is similar to that of the mobile jaw (40).

10. Apparatus according to one of claims 1 to 9 characterised in that each wrench which is connected to a rotational entrainment means (1, 2) is fixed to an arm (9, 10) which is radial with respect to the axis (X1 - X1) of the screwthreaded joint, the end of which is connected by way of a connecting means (11, 12) to at least one hydraulic jack (13, 14) which permits the arm to be turned in one direction or the other, wherein the moment of the torque applied can attain at least the moment of the torque for locking of the joint (50) to be produced.

11. Apparatus according to one of claims 1 to 10 characterised in that it comprises a means for indicating the moment of the torque applied by the wrenches (1, 2) to the screwthreaded joint (50), which receives a pressure signal from the hydraulic fluid which acts on at least one jack (13, 14), a correction means being applied directly in dependence on the sine of the angle α formed by the axis of the jack to the radius of the arm of the wrench to which it is connected.

12. Apparatus according to one of claims 2 to 11 characterised in that double-acting jacks are used, each actuating an arm (9, 10) of a wrench (1, 2), the two jacks comprising a permanent communication (64) between them at one of their ends which are disposed on the same side, the supply of high pressure fluid being effected at one of the other two ends which are selected in accordance with the direction of screwing or unscrewing of the joint to be produced.

13. A process for bedding in screwthreaded joints (50) for the assembly of tubes wherein at least one cycle of screwing and unscrewing of the components of said joint (50) is effected and wherein two wrenches (1,2) are each engaged against a component (51,52), at least one of the wrenches being entrained with a rotational movement to lock or unlock the joint, characterised in that to provide for the engagement of each wrench (1, 2) against the component (51, 52) which corresponds thereto, use is made of at least one jaw (40) which is accomodated in a chamber (32) which closely surrounds it, and said jaw is subjected to a stress such that, having regard to the material of which it is composed, its limit in respect of resistance to plastic deformation is exceeded and it applies a pressure distributed over the surface of the component (51) with which it is in contact.

14. A process according to claim 13 characterised in that the two wrenches are entrained with a rotational movement in an opposite direction to lock or unlock the junction.

## Patentansprüche

1. Vorrichtung zum Einlaufen von Gewindeverbindungen (50) mit einem männlichen Bestandteil (51) und einem weiblichen Bestandteil (52) zum Zusammensetzen von metallischen Rohren, durchzuführen, durch Ausführen wenigstens eine Zyklus von Schrauben und Losschraube, mit Erreichen des Blockierens für ein bestimmtes Moment des Schraubmoments oder Anziehmoments, wobei die Vorrichtung zwei Schüssel (1, 2) aufweist, die jeweils einen Bestandteil (51, 52) ergreifen, und wobei wenigstens einer der Schlüssel (1, 2) mit einer Drehantriebseinrichtung verbunden ist, die am Ende des Schraubens erlaubt, das vorbestimmte Moment des Blockierungsmoments zu erreichen, **dadurch gekennzeichnet**, daß die Aufnahmeeinrichtungen eines jeden dieser Schüssel (1, 2) auf den entsprechenden Bestandteil (51, 52) wenigstens einen beweglichen Spannbacken (40) aufweisen, der in der Lage ist, mit einem geringen Spiel in einer Kammer (32) zu gleiten, deren seitliche Trennwände ihn umgeben, unter Einwirkung einer Drückeinrichtung (33), die in Andruck gegen die hintere Seitenwand dieses beweglichen Spannbackens kommt, dessen vordere Seitenwand sich gegen die äußere Trennwand des Bestandteils (51) anlegt, wobei das Basismaterial diese beweglichen Spannbackens derart ist, daß es einen Widerstand gegenüber plastischer Verformung aufweist, der geringer ist als die Belastung, der es durch die Drückeinrichtung unterworfen wird, um ein winkeliges Gleiten des Spannbackens auf dem Bestandteil unter Einwirkung des Blockierungsmoments der Verbindung (50) zu verhindern.

2. Vorrichtung nach Anspruch 1, **dadurch gekennzeichnet**, daß ein jeder der Schüssel mit einer Drehantriebseinrichtung verbunden ist, die am Ende des Schraubens erlaubt, das vorbestimmte Moment des Blockierungsmoments zu erhalten.

3. Vorrichtung nach Anspruch 1 oder 2, **dadurch gekennzeichnet**, daß das Basismaterial des beweglichen Spannbackens (40) ein festes organisches Polymer ist.

4. Vorrichtung nach Anspruch 3, **dadurch gekennzeichnet**, daß das feste organische Polymer ein Kunststoffmaterial oder ein Elastomer oder ein Polymer ist, das die Eigenschaften eines Kunststoffmaterials und eines Elastomers verbindet.

5. Vorrichtung nach Anspruch 3 oder 4, **dadurch gekennzeichnet**, daß das feste organische Polymer wenigstens einen Zuschlagstoff in Form von Fasern oder diskontinuierlichen Fäden enthält.

6. Vorrichtung nach Anspruch 3 oder 4, **dadurch gekennzeichnet**, daß das feste organische Polymer wenigstens einen Zuschlagsstoff in Form von festen Teilchen enthält, um den Reibungskoeffizienten zu steigern, wobei dieser festen Teilchen entweder über die Oberfläche des Spannbackens gegenüber dem Bestandteil oder in der Masse des Spannteils verteilt sind.

7. Vorrichtung nach einem der Ansprüche 1 bis 6, **dadurch gekennzeichnet**, daß die Drückeinrichtung des beweglichen Spannbackens wenigstens ein Stelltrieb (35) ist, dessen Drückerplatte (33) in Eingriff in der Kammer (32) mit einem geringen Spiel ist, und in Anlage kommt gegen die hintere Seitenwand des beweglichen Spannbackens (40).

8. Vorrichtung nach einem der Ansprüche 1 bis 7,**dadurch gekennzeichnet**, daß der bewegliche Spannbacken (40) mit einem festen Spannbacken (41) zusammenwirkt, wobei beide sich im Inneren derselben Kammer (32) beiderseits des Bestandteils (51) befinden.

9. Vorrichtung nach Anspruch 8, **dadurch gekennzeichnet**, daß das Basismaterial des festen Backens (41) analog zu jenem des beweglichen Spannbackens (40) ist.

10. Vorrichtung nach einem der Ansprüche 1 bis 9, **dadurch gekennzeichnet**, daß jeder Schüssel, der mit einer Drehantriebseinrichtung (1, 2) verbunden ist, mit einem radialen Arm (9, 10) bezüglich der Achse (XI-XI) der Gewindeverbindung verbunden ist, dessen Ende mittels einer Verbindung (11, 12) wenigstens mit einem hydraulischen Stelltrieb (13, 14) verbunden ist, der ermöglicht, daß der Arm in eine oder in die andere Richtung gedreht wird, wobei das aufgebrachte Kräftemoment wenigstens das Blockierungsmoment der herzustellenden Verbindung (50) erreichen kann.

11. Vorrichtung nach einem der Ansprüche 1 bis 10, **dadurch gekennzeichnet**, daß sie wenigstens eine Anzeigeeinrichtung des Moments aufweist, das durch die Schüssel (1, 2) auf die Gewindeverbindung (50) ausgeübt wird, die ein Drucksignal der Hydraulikflüssigkeit empfängt, die auf wenigstens eine Stelltrieb (13, 14) wirkt, wobei eine Korrektureinrichtung direkt in Abhängigkeit des Sinus des Winkels "α" aufgebracht wird, der durch die Achse des Stelltriebs und dem Radius des Arms des Schlüssels gebildet wird, mit dem er verbunden ist.

12. Vorrichtung nach einem der Ansprüche 2 bis 11, **dadurch gekennzeichnet,** daß zwei doppelt wirkende Stelltriebe verwendet werden, die jeweils einen Arm (9, 10) eines Schlüssels (1, 2) betätigen, wobei die beiden Stelltriebe eine ständige Verbindung (64) untereinander an einem ihrer Enden, die auf derselben Seite angeordnet sind, aufweisen, wobei die Zuführung von Flüssigkeit unter hohem Druck an einem der beiden andere Ende ausgeführt wird, das entsprechend der Schraub- oder Losschraubrichtung der herzustellenden Verbindung ausgewählt wird.

13. Verfahren zum Einlaufen von Gewindeverbindungen (50), zum Verbinden von Rohren, bei dem wenigstens ein Zyklus des Schraubens und Losschraubens der Bestandteile dieser Vebindung (50) erzeugt wird und bei dem zwei Schüssel (1, 2) jeweils in Eingriff sind mit einem Bestandteil (51, 52), und wenigstens einer dieser Schüssel in Drehung versetzt wird, um die Verbindung zu blockieren und zu lösen, **dadurch** **gekennzeichnet**, daß, um den Eingriff eines jeden Schlüssels (1, 2) auf den Bestandteil (51, 52), der ihm entspricht, auszuführen, wenigstens ein Spannbacken (40) verwendet wird, der in einer Kammer (32) aufgenommen ist, die ihn eng umgibt, und daß dieser Spannbacken einer Belastung derartig unterworfen wird, daß unter Berücksichtigung des Materials, aus dem er gebildet ist, seine Widerstandsgrenze gegenüber plastischer Verformung überstiegen wird und er einen über die Oberfläche des Bestandteils (51), mit dem er in Berührung ist, verteilen Druck ausübt.

14. Verfahren nach Anspruch 13, **dadurch gekennzeichnet**, daß die beiden Schlüssel in umgekehrte Richtung in Drehung versetzt werden, um die Verbindung zu blockieren oder zu lösen.
